# EUROPÄISCHE PATENTANMELDUNG

(11) **EP 1 296 282 A2**
(43) Veröffentlichungstag der Anmeldung: **26.03.2003**
(21) Anmeldenummer: 02090319.1
(22) Anmeldetag: 05.09.2002
(51) Int. Cl.: G06N 5/04

(54) **Fuzzy-Inferenzmaschine**

(30) Priorität: 06.09.2001 DE 10144441
(71) Anmelder: BIOTRONIK Mess- und Therapiegeräte GmbH & Co Ingenieurbüro Berlin, 12359 Berlin (DE)
(72) Erfinder: Mlynski, Michael Frank, 52078 Aachen (DE); Ameling, Walter, 52074 Aachen (DE); Schaldach, Max, 91054 Erlangen (DE)
(74) Vertreter: von Oppen, Joachim, Dipl.-Ing.

(57) **Zusammenfassung**

Der Erfindung liegt der Gedanke zugrunde, eine Fuzzy-Inferenzmaschine mit einer Fuzzy-Logikeinheit vorzusehen. Die Fuzzy-Logikeinheit wandelt einen Eingangswert anhand skalarer Fuzzy-Operatoren in einen Fuzzy-Skalar um. Die umgewandelten Fuzzy-Skalare werden mittels Fuzzy-Verknüpfungsoperatoren zu skalaren Ausgangswerten verarbeitet.

Der Erfindung beruht somit darauf, die Inferenz-Maschine eines Expertensystems mit einer Fuzzy-Logikeinheit zu versehen, die direkt mit skalaren Datengrößen arbeiten kann und die die Verarbeitung unscharfen Wissens ermöglicht. Es werden dann weder ein Fuzzifizierer noch ein Defuzzifizierer benötigt. Gemäß des (unscharfen) Wissens der Wissensbasis werden die Eingangswerte durch (unscharfe) Fuzzy-Operatoren mit den Vorgaben verglichen und ergeben (unscharfe) Aussagen im Bereich von "vollständig falsch" bis "vollständig richtig".

Ferner ist eine elektrische Therapievorrichtung mit einer derartigen Fuzzy-Inferenzmaschine gezeigt.

## Beschreibung

Die Erfindung betrifft eine Fuzzy-Inferenzmaschine sowie eine elektrische Therapievorrichtung mit einer Fuzzy-Inferenzmaschine.

Mit Fortschreiten der technologischen Entwicklung haben sich auch die Therapiemöglichkeiten bei implantierbaren Herzschrittmachern sowie ICDs (Implantierbare Cardioverter Defibrillatoren) verbessert. Dabei wird jedoch die Auswahl der korrekten Programmierparameter zur Verbesserung des Zustandes des Patienten immer komplizierter, denn je mehr Daten gesammelt werden, um die optimale Therapie zu bestimmen, desto mühsamer wird es für den behandelnden Arzt, diese Daten zu analysieren und zu verstehen.

Bestrebungen gehen beispielsweise dahin, Systeme vorzusehen, welche dem behandelnden Arzt, beispielsweise auf der Grundlage von Expertensystemen, zur Diagnose, Analyse und Auswahl der entsprechenden Therapie die gesammelten Daten automatisch untersuchen und interpretieren sowie den behandelnden Arzt auf ungewöhnliche Resultate hinweisen.

Aus US 5,713,938 ist ein Fuzzy-Logik-Expertensystem für eine implantierbare kardiale Vorrichtung bekannt. Die implantierbare kardiale Vorrichtung verwendet dabei ein wissensbasiertes Expertensystem zur Prognose einer kardialen Fehlfunktion auf der Grundlage von Betriebsparametern und/oder Patientencharakteristika. Das Fuzzy-Logik-Expertensystem empfängt numerische Daten von einem Herzschrittmacher und fuzzifiziert diese Daten in einen Fuzzy-Vektor. Anschließend wird ein Regelsatz verwendet, um eine diagnostische Prognose aus den Daten herzuleiten. Die Regeln stellen dabei eine von einem behandelnden Arzt durchgeführte Analyse dar, anhand der numerische Werte in linguistische Werte umgewandelt und eine Diagnose somit unter Verwendung des in den Regeln dargelegten Wissens des behandelnden Arztes durchgeführt wird.

Eine (Experten-) Regel setzt sich zunächst aus einer Bedingung und einer Aktion zusammen:
WENN <Bedingung> DANN <Aktion>

Bedingungen können sich wiederum aus Teilbedingungen zusammensetzen, die zur Regelbedingung verknüpft werden, beispielsweise also:
WENN <Teilbed. 1> UND <Teilbed. 2> DANN <Aktion>

Eine Inferenz-Maschine, die den Schlussfolgerungsmechanismus implementieren soll, muss daher die Auswertung einer Teilbedingung sowie die Verknüpfung mehrerer Teilbedingungs-Ergebnisse durchführen.

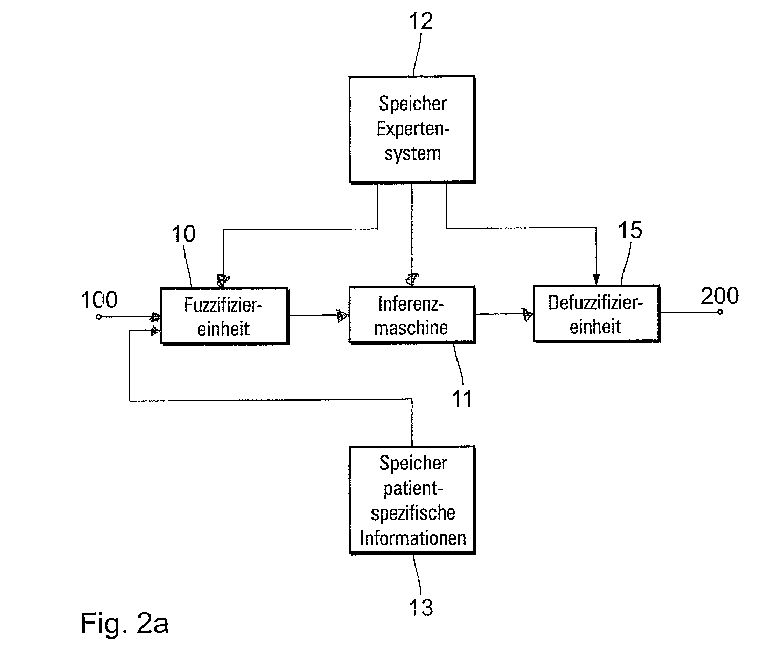

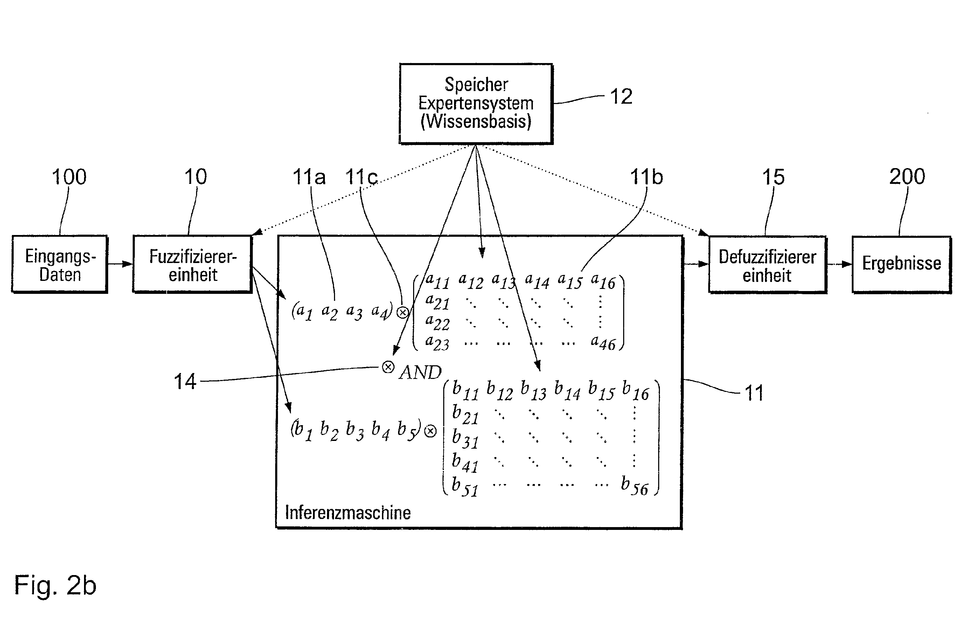

In Figur 2 a, b ist eine schematische Darstellung eines bekannten Fuzzy-Logik-Diagnosesystems gezeigt, wobei in Fig. 2b eine konzeptionelle Darstellung des Diagnosesystems und insbesondere der Inferenz-Maschine gezeigt ist. Eine Fuzzifiziereinheit 10 empfängt als Eingangswerte 100 beispielsweise Daten von einem Herzschrittmacher und führt damit eine Fuzzifizierung durch. Für die Fuzzifizierung der Eingangswerte werden z.B. drei Zugehörigkeitsfunktionen definiert und der Eingangswert wird anhand dieser Zugehörigkeitswerte in einen Fuzzy-Vektor fuzzifiziert bzw. umgewandelt. In einer Inferenzmaschine 11 werden die Zugehörigkeitswerte einer logischen Verknüpfung zugeführt, d.h. es erfolgt ein unscharfes Schließen mit unscharfen Wertmengen. In der Inferenzmaschine 11 wird hierbei der in der Fuzzifiziereinheit 10 fuzzifizierte Fuzzy-Vektor 11a mit einer Fuzzy-Matrix (Fuzzy-Relationen) 11b multipliziert, wobei diese Multiplikation ein Fuzzy-Kreuz-Produkt 11c darstellt. Die Fuzzy-Matrizen bzw. die Fuzzy-Relationen 11b werden anhand des im Expertensystem-Speicher 12 gespeicherten Expertensystems bzw. Expertenwissens, d.h. anhand der Regeln und Bedingungsvorgaben, aufgestellt. Bei der in der Inferenzmaschine 11 erfolgenden Inferenz werden nicht nur die Regeln und Bedingungsvorgaben aus dem Expertensystem sondern auch patientspezifische Daten aus einem Speicher für patientspezifische Informationen 13 mitberücksichtigt. Diese Daten müssen natürlich zunächst auch von der Fuzzifiziereinheit 10 fuzzifizierte werden, bevor sie von der Inferenz-Maschine verarbeitet werden können. Die Ergebnisvektoren der Inferenzen gemäß verschiedenen Teilbedingungen werden in einer Verknüpfungseinheit 14 (nicht gezeigt) der Inferenz-Maschine entsprechend den Regeln des Expertensystems verknüpft. Da das Ergebnis der Verknüpfung der einzelnen Ergebnisvektoren der jeweiligen Teilbedingungen eine unscharfe Wertemenge darstellt, müssen diese Werte defuzzifiziert werden, damit sie zur Steuerung oder zur Diagnose verwendet werden können. Dies erfolgt dann in einer Defuzzifiziereinheit 15.

Der Speicher mit dem Expertenwissen bzw. dem Expertensystem 12 greift auch auf die Fuzzifiziereinheit 10 zu, da die Anzahl der definierten Fuzzy-Sets sowie die definierten Zugehörigkeitsfunktionen Bestand der Wissensbasis sind, d. h. die Informationen, wie beispielsweise Eingangsdaten zu fuzzifizieren sind, sind nicht in der Fuzzifiziereinheit 10 codiert, sondern die Fuzzifiziereinheit 10 erhält diese Informationen von der Wissensbasis. Gleiches gilt entsprechend für die Defuzzifiziereinheit 15.

Bei der Fuzzifizierung wird ein realer Eingangswert in den Realisierungsgrad der Fuzzy-Sets transformiert. Abhängig vom Realisierungsgrad eines Fuzzy-Sets gilt eine diesbezügliche Aussage als "völlig falsch" (Realisierungsgrad 0) bis hin zu "vollständig wahr" (Realisierungsgrad 1). Die in dem Expertensystem vorhandenen Regeln werden durch die sogenannte Fuzzy-Inferenz implementiert. Der Eingangswert wird in einen Fuzzy-Vektoren fuzzifiziert und die Bedingungsvorgaben (für die Regeln) werden in Form von Fuzzy-Matrizen bzw. Fuzzy-Relationen aufgestellt. Bei der Verwendung der sogenannten klassischen Fuzzy-Logik tauchen jedoch einige Probleme auf, welche nachfolgend kurz angeführt sind.

Es erweist sich mitunter als schwierig textuell formulierte Bedingungen (Bedingungsteile von Regeln) unter Beachtung der definierten Fuzzy-Sets in Fuzzy-Matrizen zu implementieren. Dieser Implementierungsvorgang muss oft manuell durchgeführt werden, da eine vollständige Automatisierung dieses Vorgangs derzeit nicht realisierbar ist.

Der Rechenaufwand zur Auswertung einer Regel, die durch die Fuzzy-Sets und Fuzzy-Matrizen implementiert wird, steigt mit der Anzahl der Fuzzy-Sets. Da eine gewisse Anzahl von Fuzzy-Sets für eine vernünftige Implementierung von Fuzzy-Regeln unumgänglich ist, hat dies einen hohen Rechenaufwand zur Folge. Insbesondere bei wissensbasierten Systemen mit einer Wissensbasis von etlichen hundert bis einigen tausend Regeln ist der benötigte Rechenaufwand mitunter nicht mehr vertretbar.

Bei der Verwendung allgemein anerkannter Defuzzifiziermethoden (Schwerpunktmethode bzw. angenäherte Schwerpunktmethode) bleibt das Problem, dass eine endliche Menge von Fuzzy-Sets auf einem kontinuierlichen Bereich abgebildet wird. Dies ergibt jedoch Unstetigkeiten in höheren Ableitungen der Ausgangsfunktion, was sich im Ergebnisraum in Form von "treppenähnlichen" Verläufen darstellt.

Werden die definierten Fuzzy-Sets einer linguistischen Variablen ferner nachträglich geändert, beispielsweise weil die momentan definierten Fuzzy-Sets für eine neue Regel, die in die Wissensbasis aufgenommen werden soll, nicht ausreichen oder ungenügend sind, so müssen sämtliche bereits implementierten Regeln bzw. genauer gesagt die Relations-Matrizen, in denen diese linguistische Variable verwendet wird, geprüft und gegebenenfalls angepasst werden.

Es ist somit Aufgabe der Erfindung, eine Fuzzy-Inferenzmaschine vorzusehen, welche den Rechenaufwand im Vergleich zu bekannten Inferenzmaschinen reduziert und gleichzeitig eine vereinfachte Implementierung der aufgestellten Regeln ermöglicht.

Diese Aufgabe wird durch eine Fuzzy-Inferenzmaschine gemäß den Merkmalen des beigefügten Anspruchs 1 gelöst.

Der Erfindung liegt dabei der Gedanke zugrunde, eine Fuzzy-Inferenzmaschine mit einer Fuzzy-Logikeinheit vorzusehen. Die Fuzzy-Logikeinheit wandelt dabei einen Eingangswert anhand skalarer Fuzzy-Operatoren in einen Fuzzy-Skalar um. Die umgewandelten Fuzzy-Skalare werden mittels Fuzzy-Verknüpfungsoperatoren zu skalaren Ausgangswerten verarbeitet.

Dies hat insbesondere den Vorteil, dass die Fuzzy-Verarbeitung nunmehr in lediglich zwei Stufen, während eine Fuzzy-Verarbeitung nach dem Stand der Technik in vier Stufen - Fuzzifizieren, Inferenz, Verknüpfung der Inferenzergebnisse und Defuzzifizierung - erfolgt. Eine Defuzzifizierung fällt hier weg, da der Ausgangswert der Fuzzy-Verarbeitung ein Skalar ist. Dadurch dass sowohl die Operatoren als auch die Parameter und Daten in der Inferenzmaschine skalar sind - statt Vektoren oder Matrizen wie in dem Stand der Technik der Fall - ergibt sich eine wesentliche Reduzierung des Rechenaufwandes.

Bei einer weiteren Ausgestaltung der Erfindung weist die Fuzzy-Logikeinheit eine skalare Fuzzy-Vergleichseinheit auf. In der skalaren Vergleichseinheit wird ein skalarer Fuzzy-Vergleichsoperator als Fuzzy-Operator auf einen Eingangswert angewendet. Dabei stellt die Abweichung des Eingangswertes von einem vorgegebenen Schwellwert einen Hinweis auf die Gleichheit des Eingangswertes und des Schwellwertes dar. Hierbei ist das Ergebnis des skalaren Fuzzy-Vergleichsoperators 1, wenn der Eingangswert und der Schwellwert identisch sind. Das Ergebnis des skalaren Fuzzy-Vergleichsoperators strebt gegen 0, wenn der Betrag der Differenz des Eingangswertes und des Schwellwertes gegen unendlich geht.

Bei einer weiteren Ausgestaltung der Erfindung weist die Fuzzy-Logikeinheit eine skalare Fuzzy-Vergleichseinheit auf. Ein skalarer Fuzzy-Vergleichsoperator als Fuzzy-Operator wird auf einen Eingangswert angewandt, wobei die Größe der Abweichung des Eingangswertes von einem vorgegebenen Schwellwert bei einem Hinweis auf die Ungleichheit des Eingangswertes und des Schwellwertes liefert. Das Ergebnis des skalaren Fuzzy-Vergleichsoperators ist 0, wenn der Eingangswert und der Schwellwert identisch sind. Das Ergebnis des skalaren Fuzzy-Vergleichsoperators strebt gegen 1, wenn der Betrag der Differenz des Eingangswertes und des Schwellwertes gegen unendlich geht.

Bei einer weiteren Ausgestaltung der Erfindung weist die Fuzzy-Logikeinheit eine skalare Fuzzy-Vergleichseinheit auf, in der ein skalarer Fuzzy-Vergleichsoperator als Fuzzy-Operator auf einen Eingangswert angewendet wird, wobei die Größe der Differenz des Eingangswertes und eines vorgegebenen Schwellwertes hierbei einen Hinweis darauf liefert, ob der Eingangswert kleiner als der Schwellwert ist. Das Ergebnis des skalaren Fuzzy-Vergleichsoperators ist 0,5, wenn der Eingangswert und der vorgegebene Schwellwert identisch sind. Das Ergebnis des skalaren Fuzzy-Vergleichsoperators strebt gegen 1, wenn die Differenz aus dem Schwellwert und dem Eingangswert gegen unendlich strebt und das Ergebnis des skalaren Fuzzy-Vergleichsoperators strebt gegen 0, wenn die Differenz aus dem Eingangswert und dem Schwellwert gegen unendlich strebt.

Bei einer weiteren Ausgestaltung der Erfindung weist die Fuzzy-Logikeinheit eine skalare Fuzzy-Vergleichseinheit auf, in der ein skalarer Fuzzy-Vergleichsoperator als Fuzzy-Operator auf einen Eingangswert angewendet wird, wobei die Größe der Differenz des Eingangswertes und eines vorgegebenen Schwellwertes dabei einen Hinweis liefert, ob der Eingangswert größer als der Schwellwert ist. Das Ergebnis des skalaren Fuzzy-Vergleichsoperators ist 0,5, wenn der Eingangswert und der vorgegebene Schwellwert identisch sind. Das Ergebnis des skalaren Fuzzy-Vergleichsoperators strebt gegen 0, wenn die Differenz aus dem Schwellwert und dem Eingangswert unendlich strebt und das Ergebnis des skalaren Fuzzy-Vergleichsoperators strebt gegen 1, wenn die Differenz aus dem Eingangswert und dem Schwellwert gegen unendlich strebt.

Die Vorteile der in den letzten vier Absätzen beschriebenen Ausgestaltungen der Erfindung liegen insbesondere darin, dass die Anwendung eines skalaren Fuzzy-Vergleichsoperators auf einen realen Eingangswert zu einem Fuzzy-Skalar als Ergebnis des Vergleichsoperators führt. Während in einer Inferenzmaschine nach dem Stand der Technik zunächst eine Fuzzifizierung der Eingangswerte durchgeführt und anschließend eine Inferenz gebildet werden muss, muss bei diesen Ausgestaltungen der Erfindung lediglich ein Vergleichsoperator auf den bzw. die Eingangswerte angewendet werden. Die Anwendung eines der Vergleichsoperatoren ersetzt die Fuzzifizierung der Eingangswerte und die Bildung der Inferenz einschließlich der dazu benötigten Vektor- und Matrizenberechnung.

Bei einer bevorzugten Ausgestaltung der Erfindung weist die skalare Fuzzy-Vergleichseinheit einen Speicher auf, in dem ein Operations-Parameter speicherbar ist. Anhand des Operations-Parameters lässt sich die Form des Übergangs des Ergebnisses des Vergleichsoperators von 0 auf 1 oder umgekehrt beeinflussen. Durch Variation des Übergangsparameters lässt sich der Grad der "Unschärfe", d.h. die Form des Übergangs von 0 auf 1 für das Ergebnis der Operation verändern.

Die Aufgabe der Erfindung wird ferner durch eine elektrischen Therapievorrichtung mit den Merkmalen des beigefügten Anspruchs 7 gelöst.

Die Erfindung geht dabei von den Gedanken aus, kardiale Ereignisse anhand einer Fuzzy-Inferenzmaschine in einer elektrischen Therapievorrichtung auszuwerten und gegebenenfalls eine Diagnose durchzuführen.

Die Verwendung einer Fuzzy-Inferenzmaschine bei einem Schrittmacher, ICD oder vergleichbaren implantierbaren Therapie-Systemen erweist sich als vorteilhaft, da eine derartige Fuzzy-Inferenzmaschine dazu geeignet ist, die Regeln eines Expertensystems zu implementieren, ohne dass der Rechenaufwand dabei zu hoch wird.

Nachfolgend werden Ausführungsbeispiele der Erfindung anhand der beigefügten Zeichnung beschrieben. Es zeigen:
- Figuren 1 a und b:: ein Fuzzy-Logik-Diagnosesystem mit einer Fuzzy-Inferenzmaschine gemäß einem Ausführungsbeispiel der Erfindung, und
- Figuren 2 a und b:: ein Fuzzy-Logik-Diagnosesystem gemäß dem Stand der Technik.

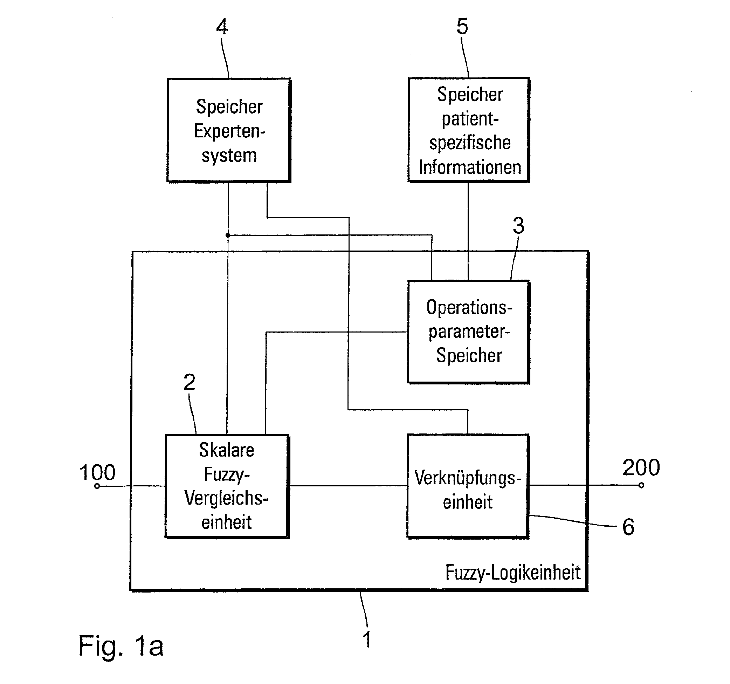

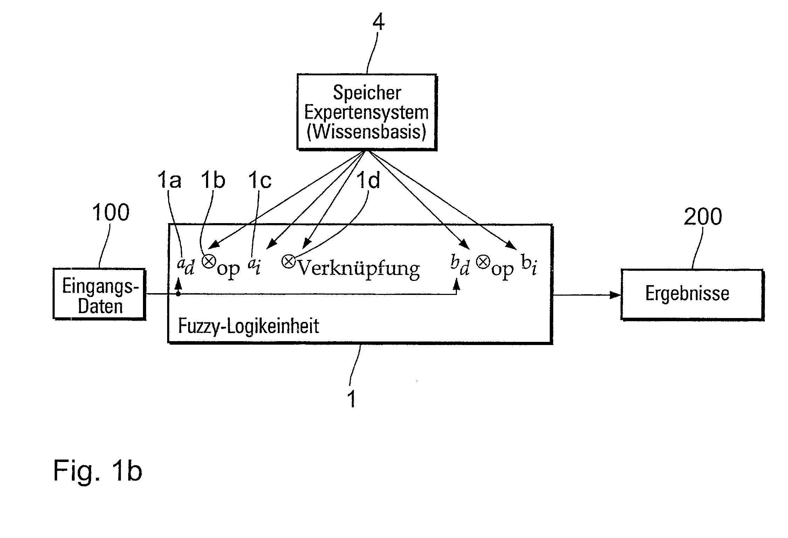

Figur 1a, b zeigt ein Fuzzy-Logik-Diagnosesystem gemäß einem Ausführungsbeispiel der Erfindung, wobei in Figur 1b eine konzeptionelle Darstellung der Fuzzy-Logikeinheit 1 als Vergleich zu der konzeptionelle Darstellung der bekannten Inferenz-Maschine aus Figur 2b gezeigt ist. Die Fuzzy-Inferenzmaschine weist eine Fuzzy-Logikeinheit 1, einen Expertensystem-Speicher 4, und einen Speicher für patientspezifische Informationen 5 auf, wobei die Fuzzy-Logikeinheit 1 jeweils mit dem Speicher 4 und dem Speicher 5 verbunden ist. Die Fuzzy-Logikeinheit 1 weist eine skalare Fuzzy-Vergleichseinheit 2, eine Verknüpfungseinheit 6 und einen Operationsparameter-Speicher 3 auf. Der Expertensystem-Speicher 4 ist mit der Verknüpfungseinheit 6 verbunden. Die skalare Fuzzy-Vergleichseinheit 2 ist eingangsseitig mit den Ausgang 100 eines Schrittmachers, dem Expertensystem-Speicher 4 und dem Operationsparameter-Speicher 3 und ausgangsseitig mit der Verknüpfungseinheit 6 verbunden, die wiederum ausgangsseitig die Ergebnisse 200 der Inferenz ausgibt. Der Operationsparameter-Speicher 3 ist eingangsseitig mit dem Expertensystem-Speicher 4 und dem Speicher für patientspezifische Informationen 5 und ausgangsseitig mit der skalaren Fuzzy-Vergleichseinheit 2 verbunden.

Die Fuzzy-Logikeinheit 1 empfängt Daten von einem Schrittmacher als Eingangswerte 100. In der skalaren Fuzzy-Vergleichseinheit 2 wird dieser Eingangswert mittels Fuzzy-Vergleichsoperatoren in einen Fuzzy-Skalar umgewandelt. Der Grad der "Unschärfe" des Ergebnisses der Operation lässt sich anhand des in dem Speicher 3 gespeicherten Operations-Parameter beeinflussen. Das Ergebnis der Berechnung beispielsweise einer Teilbedingung in der Fuzzy-Logikeinheit 1 stellt einen Fuzzy-Skalar dar. Wenn mehrere Teilbedingungen 1a vorhanden sind und diese zu verknüpfen sind, so werden die Ergebnisse dieser Teilbedingungen, d.h. die Ausgangswerte der skalaren Fuzzy-Vergleichseinheit 2 zu den jeweiligen Eingangswerten der Verknüpfungseinheit 6 und entsprechend den Regeln des in dem Speicher 4 gespeicherten Expertensystem verknüpft 1d. Die Ausgangswerte der Verknüpfungseinheit 6 sind skalare Werte und müssen somit nicht defuzzifiziert werden.

Ausgehend von der Notwendigkeit, textuelle Aussagen bzw. Bedingungen, wie Beispielsweise
"WENN eine Größe ziemlich groß ist, DANN..." oder
"WENN eine Größe sehr groß ist, DANN...", mathematisch erfassen zu können, ohne dabei mehrdimensionale Variablen bzw. Vektoren oder Matrizen einführen zu müssen, werden neue Operatoren vorgestellt. Diese Operatoren dienen dazu, die Bedingungen einer Regel aus einem Expertensystem direkt in eine mathematisch und somit von einem Algorithmus berechenbare Form umzusetzten.

Mit Hilfe der skalaren Fuzzy-Vergleichseinheit 2 lassen sich beispielsweise vier Vergleichsoperatoren realisieren:
a) Beim Operator FE (Fuzzy-Equal) wird ein erster und ein zweiter Operand hinsichtlich ihrer Gleichheit verglichen. Ist der erste Operand identisch mit dem zweiten, so ist das Ergebnis des Operators FE gleich 1, d.h. die Bedingung ist vollständig wahr. Wenn der Betrag der Differenz zwischen dem ersten und dem zweiten Operanden gegen unendlich strebt, strebt das Ergebnis des Operators FE gegen 0, d.h. die Bedingung ist vollständig falsch.
b) Der Operator FNE (Fuzzy-Not-Equal) vergleicht einen ersten und einen zweiten Operand hinsichtlich ihrer Ungleichheit. Ist der erste Operand gleich dem zweiten, so ist das Ergebnis des Operators FNE gleich 0, d.h. die Bedingung ist vollständig falsch. Strebt der Betrag der Differenz des ersten und des zweiten Operanden gegen unendlich, so strebt das Ergebnis des Operators FNE gegen 1, d.h. die Bedingung ist vollständig wahr.
c) Der Operator FL (Fuzzy-Less) vergleicht die beiden Operanden, um festzustellen, ob der erste Operand kleiner als der zweite Operand ist. Ist der erste Operand gleich dem zweiten, so entspricht das Ergebnis des Operators FL 0,5, d.h. die Bedingung ist weder wahr noch falsch. Strebt die Differenz des zweiten und des ersten Operanden gegen unendlich, so strebt das Ergebnis des Operators FL gegen 1, d.h. die Bedingung ist vollständig wahr. Strebt die Differenz des ersten und des zweiten Operanden gegen unendlich, so strebt das Ergebnis des Operators FL gegen 0, d.h. die Bedingung ist vollständig falsch.
d) Der Operator FG (Fuzzy-Greater) vergleicht die beiden Operanden, um zu ermitteln, inwieweit der erste Operand größer als der zweite Operand ist. Ist der erste Operand identisch mit dem zweiten, so ergibt das Ergebnis des Operators FG 0,5, d.h. die Bedingung ist weder wahr noch falsch. Strebt die Differenz des zweiten und des ersten Operanden gegen unendlich, so strebt das Ergebnis des Operators FG gegen 0, d.h. die Bedingung ist vollständig falsch. Strebt die Differenz des ersten und des zweiten Operanden gegen unendlich, so strebt das Ergebnis des Operators FG gegen 1, d.h. die Bedingung ist vollständig wahr.

Das Ergebnis einer mit Hilfe der Fuzzy-Logikeinheit 1 ermittelten Bedingung ist nicht nur ein Skalar, sondern hat darüber hinaus stets einen Wert zwischen 0 und 1. Dabei ist 0 im boolschen Sinne als " vollständig falsch" und 1 im boolschen Sinne als " vollständig richtig" zu interpretieren. Sämtliche Werte zwischen 0 und 1 bilden somit unscharfe Zwischenaussagen, wie beispielsweise 0,5, d. h. unbekannt, kann nicht entschieden werden.

Bei allen vorstehend angeführten Operatoren lässt sich der Grad der "Unschärfe", d.h. die Form des Überganges von 0 nach 1 oder umgekehrt, des Ergebnisses der Vergleichsoperation durch Variation des Operationsparameters einstellen.

Um mehrere Teilergebnisse miteinander verknüpfen zu können, werden verschiedene Verknüpfungsoperatoren in der Verknüpfungseinheit 6 verwendet. Dazu können boolsche-Operatoren oder auch die sogenannten kompensatorischen Operatoren verwendet werden. Letztere zeichnen sich dadurch aus, dass bei einer Verknüpfung vieler Teilergebnisse, bei denen eine deutliche Mehrheit hinsichtlich einer Aussage besteht, diese Mehrheit in jedem Fall berücksichtigt wird.

Eine Implementierung einer Regel des in Speicher 4 gespeicherten Expertensystems bzw. Expertenwissens erfolgt durch Anwendung eines der vier vorstehend angeführten Vergleichsoperatoren mit einem entsprechenden Operationsparameter zur Ermittlung der Ergebnisse von Teilbedingungen der Regel. Die verschiedenen Ergebnisse der Teilbedingungen werden dann miteinander anhand der Vorgaben der entsprechenden Regel in der Vergleichseinheit 6 anhand vorgegebener Verknüpfungsoperatoren verknüpft.

Die Fuzzy-Inferenzmaschine kann beispielsweise in einem Risikoanalysator zur Ermittlung und Diagnose von intra-kardialen Zuständen, welche das Wohlbefinden eines Patienten bedrohen, eingesetzt werden. Dazu wird mittels einer Sense-Elektrode und einer Elektrodenleitung ein intra-kardiales EKG-Signal aufgenommen. Das aufgenommene EKG-Signal wird einer Detektionseinheit zugeführt, in der die QRS-Komplexe, die Morphologie der QRS-Komplexe, die entsprechenden Intervalle und verschiedene Arten von Extrasystolen sowie anderer EKG-Parameter detektiert werden.

Ferner wird ein Expertensystem erstellt, in dem das Auftreten bestimmter QRS-Komplexe sowie anderer EKG-Parameter mit einer Diagnose korreliert werden, d.h. die Regelbasis für das Expertensystem wird erstellt. Dabei kann natürlich auf die Erfahrung und das Wissen einer Vielzahl von Ärzten zurückgegriffen und in das Expertensystem eingebaut werden. Es ist bei der Verwendung der vorstehend angeführten Vergleichsoperatoren möglich textuell formulierte Regeln einfach in mathematische Formulierungen umzusetzen, so dass die Erstellung der Regelbasis sowie deren Umsetzung und Implementierung in mathematische und leicht durch Algorithmen berechenbare Formulierungen ohne große Schwierigkeiten möglich ist.

Die Fuzzy-Inferenzmaschine sowie die zu implementierende Regelbasis können beispielsweise dazu dienen, das Risiko eines plötzlichen Herztodes zu ermitteln. Dazu wird ein QRS-Komplex wie oben beschrieben detektiert. Dann muss festgestellt werden, ob und welche ventrikuläre Extrasystolen (VES) vorhanden sind und welche sich zur Analyse eignen. Die VES wird auf bestimmte Kriterien, wie beispielsweise das Zeitintervall, hin untersucht. Anschließend wird die Summe aller geeigneter VES gebildet und entsprechende Zeitintervalle ermittelt. Ferner fließen weitere Parameter, wie beispielsweise das Alter und die Frage, ob es sich um einen Infarktpatienten handelt, bei der Beurteilung mit ein.

Die vorliegende Fuzzy-Inferenzmaschine eignet sich für den Einsatz sowohl bei der Diagnostik bestimmter kardialer Ereignisse als auch bei der Steuerung der Pacing- der Defibrillationsfunktion elektrischer Therapieeinheiten wie beispielsweise Herzschrittmacher oder Defibrillatoren. Natürlich lässt sich auch eine Kombination aus der Erfassung bzw. Diagnostik kardialer Ereignisse mit einer anschließenden Steuerung der geeigneten Gegenmaßnahmen durch die dargelegte Fuzzy-Inferenzmaschine erreichen.

Die durch die Fuzzy-Inferenzmaschine erfolgte Diagnostik oder Steuerung hängt alleine von dem gegebenen Expertensystem und der entsprechenden Regelbasis ab. Die Diagnostik kann in situ erfolgen oder die EKG-Daten können über einen vorbestimmten Zeitraum in einer elektrischen Therapieeinheit gespeichert werden, um anschließend beispielsweise telemetrisch ausgelesen zu werden, damit sie in einer extra-korporalen Vorrichtung von der Fuzzy-Inferenzmaschine analytisiert werden und eine entsprechende Diagnose erstellt wird.

Der Erfindung beruht somit darauf, die Inferenzmaschine eines Expertensystems mit einer Fuzzy-Logikeinheit zu versehen, die direkt mit skalaren Datengrößen arbeiten kann und die die Verarbeitung unscharfen Wissens ermöglicht. Es werden dann weder ein Fuzzifizierer noch ein Defuzzifizierer benötigt. Gemäß des (unscharfen) Wissens der Wissensbasis werden die Eingangswerte durch (unscharfe) Fuzzy-Operatoren mit den Vorgaben verglichen und ergeben (unscharfe) Aussagen im Bereich von "vollständig falsch" bis "vollständig richtig". ständig richtig".

## Patentansprüche

1. Fuzzy-Inferenzmaschine, mit einer Fuzzy-Logikeinheit (1) , welche dazu ausgestaltet ist, einen Eingangswert mittels skalarer Fuzzy-Operatoren in einen Fuzzy-Skalar umzuwandeln, wobei Fuzzy-Skalare mittels Fuzzy-Verknüpfungsoperatoren zu skalaren Ausgangswerten verarbeitet werden.

2. Fuzzy-Inferenzmaschine nach Anspruch 1, **dadurch gekennzeichnet, dass** die Fuzzy-Logikeinheit (1) eine skalare Fuzzy-Vergleichseinheit (2) umfasst, die ausgebildet ist, einen skalaren Fuzzy-Vergleichsoperator als Fuzzy-Operator derartig auf einen Eingangswert anzuwenden, dass die Größe der Abweichung des Eingangswertes von einem vorgegebenen Schwellwert einen Hinweis auf die Gleichheit des Eingangswertes und des Schwellwertes liefert, wobei das Ergebnis des skalaren Fuzzy-Vergleichsoperators 1 ist, wenn der Eingangswert und der Schwellwert identisch sind, und wobei das Ergebnis des skalaren Fuzzy-Vergleichsoperators gegen 0 strebt, wenn der Betrag der Differenz des Eingangswertes und des Schwellwertes gegen unendlich geht.

3. Fuzzy-Inferenzmaschine nach Anspruch 1, **dadurch gekennzeichnet, dass** die Fuzzy-Logikeinheit (1) eine skalare Fuzzy-Vergleichseinheit (2) umfasst, die ausgebildet ist, einen skalaren Fuzzy-Vergleichsoperator als Fuzzy-Operator derartig auf einen Eingangswert anzuwenden, dass die Größe der Abweichung des Eingangswertes von einem vorgegebenen Schwellwert einen Hinweis auf die Ungleichheit des Eingangswertes und des Schwellwertes liefert, wobei das Ergebnis des skalaren Fuzzy-Vergleichsoperators 0 ist, wenn der Eingangswert und der Schwellwert identisch sind, und wobei das Ergebnis des skalaren Fuzzy-Vergleichsoperators gegen 1 strebt, wenn der Betrag der Differenz des Eingangswertes und des Schwellwertes gegen unendlich geht.

4. Fuzzy-Inferenzmaschine nach Anspruch 1, **dadurch gekennzeichnet, dass** die Fuzzy-Logikeinheit (1) eine skalare Fuzzy-Vergleichseinheit (2) umfasst, die ausgebildet ist, einen skalaren Fuzzy-Vergleichsoperator als Fuzzy-Operator derart auf einen Eingangswert anzuwenden, dass die Größe der Differenz des Eingangswertes und eines vorgegebenen Schwellwerts einen Hinweis darauf geliefert, ob der Eingangswert kleiner als der Schwellwert ist, wobei das Ergebnis des skalaren Fuzzy-Vergleichsoperators 0,5 ist, wenn der Eingangswert und der vorgegebene Schwellwert identisch sind, wobei das Ergebnis des skalaren Fuzzy-Vergleichsoperators gegen 1 strebt, wenn die Differenz aus dem Schwellwert und dem Eingangswert gegen unendlich strebt, und wobei das Ergebnis des skalaren Fuzzy-Vergleichsoperators gegen 0 strebt, wenn die Differenz aus dem Eingangswert und dem Schwellwert gegen unendlich strebt.

5. Fuzzy-Inferenzmaschine nach Anspruch 1, **dadurch gekennzeichnet, dass** die Fuzzy-Logikeinheit (1) eine skalare Fuzzy-Vergleichseinheit (2) umfasst, die ausgebildet ist, einen skalaren Fuzzy-Vergleichsoperator als Fuzzy-Operator derart auf einen Eingangswert anzuwenden, dass die Größe der Differenz des Eingangswertes und eines vorgegebenen Schwellwerts einen Hinweis darauf geliefert, ob der Eingangswert größer als der Schwellwert ist, wobei das Ergebnis des skalaren Fuzzy-Vergleichsoperators 0,5 ist, wenn der Eingangswert und der vorgegebene Schwellwert identisch sind, wobei das Ergebnis des skalaren Fuzzy-Vergleichsoperators gegen 0 strebt, wenn die Differenz aus dem Schwellwert und dem Eingangswert gegen unendlich strebt, und wobei das Ergebnis des skalaren Fuzzy-Vergleichsoperators gegen 1 strebt, wenn die Differenz aus dem Eingangswert und dem Schwellwert gegen unendlich strebt.

6. Fuzzy-Inferenzmaschine nach einem der vorherigen Ansprüche, **dadurch gekennzeichnet, dass** die Fuzzy-Logikeinheit (1) einen Speicher (3) aufweist, in dem ein Operations-Parameter gespeichert wird, wobei die Form des Übergangs des Ergebnisses des jeweiligen Vergleichsoperators von 0 auf 1 oder umgekehrt anhand dieses Operations-Parameters einstellbar ist.

7. Elektrische Therapievorrichtung mit einer Inferenzmaschine nach einem der Ansprüche 1 bis 6.

8. Elektrische Therapievorrichtung nach Anspruch 7, **gekennzeichnet durch** einen Expertensystem-Speicher (4), welcher dazu ausgestaltet ist Expertenwissen zu speichern, einen Speicher für patient-spezifische Informationen (5), welcher dazu ausgestaltet ist, patient-spezifische Daten zu speichern.
